Europäisches Patentamt

European Patent Office

Office européen des brevets

(19)

(11) Veröffentlichungsnummer: **0 004 915**
**B1**

(12)

# EUROPÄISCHE PATENTSCHRIFT

(45) Veröffentlichungstag der Patentschrift:
**12.05.82**

(51) Int. Cl.³: **G 05 D 22/02, D 21 F 5/16**

(21) Anmeldenummer **79101045.7**

(22) Anmeldetag **05.04.79**

(54) **Anordnung zur Trocknungsregelung an einer Papiermaschine.**

(30) Priorität: **17.04.78 DE 2816551**

(43) Veröffentlichungstag der Anmeldung:
**31.10.79 Patentblatt 79/22**

(45) Bekanntmachung des Hinweises auf die Patenterteilung:
**12.05.82 Patentblatt 82/19**

(84) Benannte Vertragsstaaten:
**CH FR GB IT NL SE**

(56) Entgegenhaltungen:
**AU-B-445 577**
**DE-B-1 149 474**
**DE-C-697 509**
**DE-C-2 027 674**

(73) Patentinhaber: **SIEMENS AKTIENGESELLSCHAFT**
**Berlin und München, Postfach 22 02 61,**
**D-8000 München 22 (DE)**

(72) Erfinder: **Grassmann, Hans-Christian, Dipl.-Ing., An den**
**Eichen 18, D-8521 Igelsdorf (DE)**

## Anordnung zur Trocknungsregelung an einer Papiermaschine

Die Erfindung bezieht sich auf eine Anordnung zur Trocknungsregelung an einer Papiermaschine, bei der der regelbaren Trockenpartie mit dampfbeheizten Trockenzylindern ein regelbarer kapazitiver Hochfrequenztrockner nachgeschaltet ist und die gemessene Feuchte der Papierbahn zur Regelung des Hochfrequenztrockners dient.

Aus der DE-C-697 509 ist eine Trockenvorrichtung für Papierbahnen auf Papiermaschinen bekannt, bei der den dampfbeheizten Trockenzylindern ein zusätzlicher elektrischer kapazitiver Hochfrequenztrockner nachgeschaltet ist. Durch die Einwirkung von Hochfrequenzfeldern wird das vorgetrocknete Papier relativ genau auf den gewünschten Trocknungsgrad gebracht. Zur Überwachung des Feuchtigkeitsgrades der Papierbahn sind dabei im Stromkreis des Hochfrequenzgenerators Meßgeräte vorgesehen.

Aus der AU-B-445 577 ist ebenfalls eine kombinierte Zylinder- und Hochfrequenztrocknung einer Papierbahn bekannt. Hierbei wird zur Regelung des Hochfrequenztrockners ein Rechner benutzt.

Durch die Verwendung des Hochfrequenztrockners ergibt sich dabei im Gegensatz zu den mit relativ großer Trägheit arbeitenden Trockenzylindern der Vorteil, daß die Trocknungsleistung sehr genau und mit kleiner Regelverzögerung eingestellt werden kann.

Bei konstant zu haltender Endfeuchte arbeitet z. B. die erstgenannte bekannte Anordnung so, daß die Hochfrequenzleistung erhöht wird, wenn sich die gemessene Feuchte der Bahn erhöht und umgekehrt. Diese Regelung hat aber zur Folge, daß die durch den Hochfrequenztrockner erreichte Vergleichmäßigung des Feuchteprofils unvorhersehbar schwanken kann, da die Vergleichmäßigung von Endfeuchte und Hochfrequenzleistung abhängig ist.

Die Aufgabe der vorliegenden Erfindung besteht darin, Trockenpartie und Hochfrequenztrockner so aufeinander abzustimmen, daß sich bei einer raschen Regelung eine optimale Vergleichmäßigung des Feuchteprofils der Papierbahn ergibt.

Diese Aufgabe wird erfindungsgemäß dadurch gelöst, daß die über ein traversierendes Meßgerät erfaßte Endfeuchte der Papierbahn einem Rechner zugeführt wird, der Regler der Trockenpartie über den Rechner entsprechend einer mittleren vorgegebenen Endfeuchte der Papierbahn ausgesteuert ist und dem Regler des Hochfrequenztrockners vom Rechner ein über eine Feldstärkenregelung konstant zu haltender Mittelwert der elektrischen Leistung zur Einhaltung einer vorbestimmten Feuchtedifferenz vorgegeben ist.

Anhand eines in der Zeichnung dargestellten Ausführungsbeispiels sei die Erfindung näher beschrieben; es zeigt

Fig. 1 den Aufbau der Regelstrecke und die

Regeleinrichtungen in schematischer Darstellung und

Fig. 2 den Zusammenhang zwischen Vergleichmäßigung der Trocknung und der Verdampfungsleistung des Hochfrequenztrockners

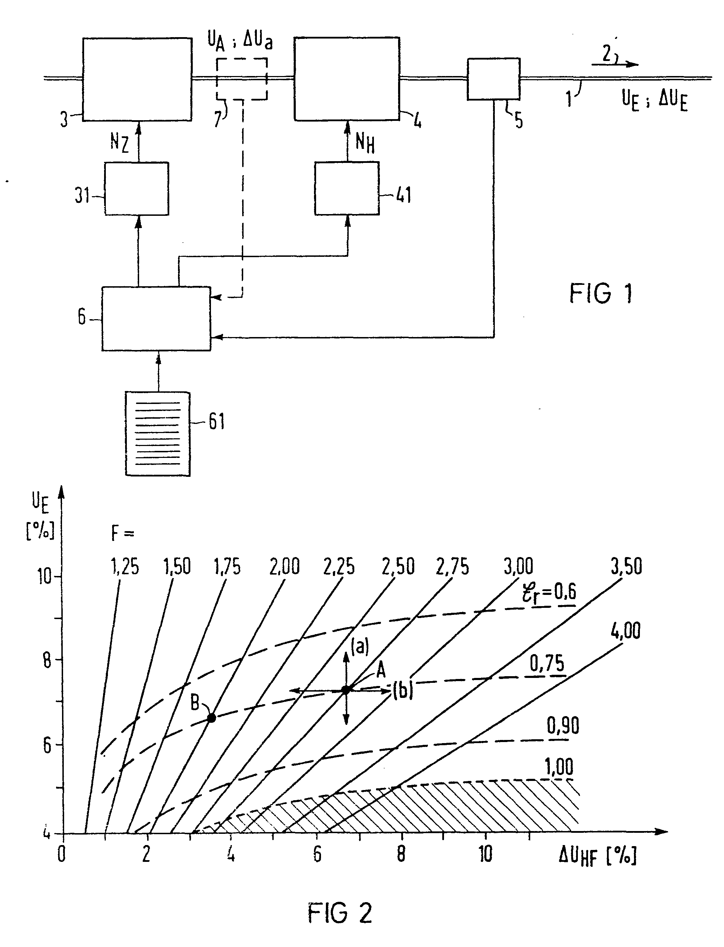

Die in Richtung des Pfeiles 2 laufende Papierbahn 1 (Fig. 1) wird zunächst in der Trockenpartie 3 auf den nichtgezeigten Trockenzylindern weitgehend getrocknet. Daran schließt sich eine weitere Trocknung und Vergleichmäßigung des Feuchteprofils im kapazitiven Hochfrequenztrockner 4 an. Dieser Hochfrequenztrockner 4 kann in an sich bekannter Weise entsprechend der DE-PS 2 027 674 aufgebaut sein.

Die Feuchtewerte der getrockneten Bahn werden mittels einer traversierenden Meßvorrichtung 5 erfaßt und einem Rechner 6 zugeführt. Im Rechner 6 werden hieraus Feuchteprofil mittlere prozentuale Endfeuchte $U_E$ und mittlere Abweichung $\Delta U_E$ von der mittleren prozentuale Endfeuchte $U_E$ errechnet; die entsprechende Daten für die prozentuale mittlere Feuchte $U$ und die mittlere Abweichung $\Delta U_a$ am Eingang des Hochfrequenztrockners 4 können über ein weitere Meßvorrichtung 7 ebenfalls im Rechner 6 bestimmt werden.

Die Trockenpartie 3 wird über den Regler 3 hinsichtlich ihrer Verdampfungsleistung $N_Z$ s ausgeregelt, daß sich — bei Einhaltung eine vorbestimmten Feuchtedifferenz im Hochfrequenztrockner 4 — eine mittlere prozentual Endfeuchte $U_E$ am Ausgang des Hochfrequenztrockners 4 einstellt.

Dem Regler 41 des Hochfrequenztrockners wird als Sollwert vom Rechner 6 eine bestimmt mittlere Verdampfungsleistung $N_H$, die proportional zur vorbestimmten Feuchtedifferenz de Hochfrequenztrockners 4 ist, vorgegeben. Di Elektrodenspannung bzw. die Feldstärke de Hochfrequenztrockners 4 wird hierzu so geregelt, daß der Mittelwert des Anodenstrom konstant gehalten wird. Als Zeit für di Mittelwertbildung können z. B. zwei Minute dienen. Auf diese Weise arbeitet der Regler 41 Verbindung mit der fünffachen Stellzeit de Reglers 31 so, daß sich ein optimaler Vergleich mäßigungsfaktor für die Trocknung ergit Kurzzetischwankungen der Feuchte werden sel schnell selbsttätig durch den HF-Trockner 4 b konstanter Feldstärke ausgeglichen.

Entsprechend dem im Programmspeicher ( des Rechners niedergelegten Programm könne die vorgenannten Werte vorteilhafterweise nach den vorliegenden Betriebsbedingunge und Papierqualitäten verändert werden.

Die Zusammenhänge für die vorgenann Regelung seien anhand von Fig. 2 näher erlä tert, wobei zunächst folgende Definitione eingeführt seien:

$U_A$ = prozentuale mittlere Feuchte der Bal

1 am Eingang des Hochfrequenztrockners 4.

$\Delta U_A$ = errechnete mittlere Abweichung von der errechneten mittleren prozentualen Feuchte $U_A$ am Eingang des Hochfrequenztrockners 4.

$U_E$ = prozentuale mittlere Endfeuchte am Ausgang des Hochfrequenztrockners 4.

$\Delta U_E$ = errechnete mittlere Abweichung von der mittleren Endfeuchte $U_E$.

$\dfrac{\Delta U_A}{\Delta U_E}$ = F = Vergleichmäßigungsfaktor des Hochfrequenztrockners.

$U_A - U_E$ = $\Delta U_{HF}$ = Feuchtedifferenz, die proportional der Verdampfungsleistung $N_H$ des Hochfrequenztrockners 4 ist.

Es wurde festgestellt, daß der Vergleichmäßigungsfaktor F sowohl von der Feuchtedifferenz $\Delta U_{HF}$, d. h. also von der Verdampfungsleistung $N_H$ des Hochfrequenztrockners 4 als auch von der prozentualen mittleren Endfeuchte $U_E$ abhängig ist.

Dieser durch Meßergebnisse erhärtete Zusammenhang zwischen Vergleichmäßigungsfaktor F und Feuchtedifferenz $\Delta U_{HF}$ ist in Fig. 2 näher für verschiedene mittlere prozentuale Endfeuchte $U_E$ dargestellt; ferner ist als Parameter noch die relative Feldstärke

$$\mathfrak{E} = \frac{E}{E_{max}}$$

eingetragen, wobei E die jeweilige Feldstärke und Emax die maximale Feldstärke im HF-Trockner 4 ist.

Um einen optimalen und definierten Vergleichmäßigungsfaktor F zu erhalten, sollte die Feuchtedifferenz $\Delta U_{HF}$ nicht sich selbst überlassen bleiben, sondern auf einen vorgegebenen Wert gehalten werden. Falls dies nicht geschieht, würde sich bei einer Endfeuchte $U_E$ von z. B. 7% beim Arbeitspunkt A bei einer zufälligen Senkung der vom Hochfrequenztrockner 4 geforderten Feuchtedifferenz $\Delta U_{HF}$ von 7 auf 3 eine Verringerung des Vergleichmäßigungsfaktors F von 2,75 auf 2, d. h. der Arbeitspunkt B bei konstanter Feldstärke ergeben. Die Konstanthaltung der Feuchtedifferenz $\Delta U_{HF}$, d. h. des Mittelwertes der Verdampfungsleistung $N_H$ — und damit des Vergleichmäßigungsfaktors — geschieht durch entsprechende Aussteuerung des Hochfrequenzstromes 4 über den Mittelwert des Hochfrequenzstromes mittels Verändern der Elektrodenfeldstärke (Richtung a). Da die mittlere prozentuale Feuchte $U_A$ vom Rechner durch entsprechende Aussteuerung der Verdampfungsleistung der Trockenpartie 3 auf dem vorgegebenen Wert gehalten wird, ergibt sich somit auch eine definierte prozentuale mittlere Feuchte $U_E$ am Ausgang des Hochfrequenztrockners 4.

Kurzzeitschwankungen des Mittelwertes der Eingangsfeuchte $U_A$ werden bei konstanter Feldstärke durch den Selbstregeleffekt des Hochfrequenztrockners 4 — bei entsprechender Leistungsreserve — sehr schnell beseitigt, so daß die vorgegebene Endfeuchte $U_E$ annähernd konstant bleibt (Richtung b).

Durch die vorgenannte Anordnung zur Trocknungsregelung erhält man bei einem hohen Vergleichmäßigungseffekt eine optimale Verteilung der Heizleistung zwischen Trockenpartie und Hochfrequenztrockner. Damit wird die Produktion der Maschine erhöht und wertvolle Energie eingespart.

## Patentanspruch

Anordnung zur Trocknungsregelung an einer Papiermaschine, bei der der regelbaren Trockenpartie (3) mit dampfbeheizten Trockenzylindern ein regelbarer kapazitiver Hochfrequenztrockner (4) nachgeschaltet ist und die gemessene Feuchte der Papierbahn (1) zur Regelung des Hochfrequenztrockners (4) dient, dadurch gekennzeichnet, daß die über ein traversierendes Meßgerät (5) erfaßte Endfeuchte der Papierbahn (1) einem Rechner (6) zugeführt wird, der Regler (31) der Trockenpartie (3) über den Rechner (6) entsprechend einer mittleren vorgegebenen Endfeuchte ($U_E$) der Papierbahn (1) ausgesteuert ist und dem Regler (41) des Hochfrequenztrockners (4) vom Rechner (6) ein über eine Feldstärkenregelung konstant zu haltender Mittelwert der elektrischen Leistung ($N_H$) zur Einhaltung einer vorbestimmten Feuchtedifferenz ($\Delta U_{HF}$) vorgegeben ist.

## Claim

An arrangement for the control of drying in a papermaking machine, in which a controllable capacitive high-frequency drier (4) is connected after the controllable drying section (3) having steam-heated drying cylinders, and the measured moisture content of the paper web (1) serves to control the high-frequency drier (4), characterised in that the final moisture content of the paper web (1), which is determined by means of a traversing measuring device (5), is fed to a computer (6), that the controller (31) of the drying section (3) is adjusted by means of the computer (6) to correspond to a predetermined average final moisture content ($U_E$) of the paper web (1), and that, in order to maintain a predetermined difference in moisture content ($\Delta U_{HF}$), the controller (41) of the high-frequency drier (4) is set by the computer (6) to give an average value of the electric power output ($N_H$) which is maintained constant by control of the field strength.

## Revendication

Dispositif pour la régulation du séchage de machines à papier, dans lequel on prévoit, en avant du train de séchage (3) à cylindres sécheurs chauffés à la vapeur, un sécheur capacitif haute fréquence (4) susceptible d'être régulé, l'humidité mesurée de la bande de papier (1) servant à régler le sécheur haute fréquence (4), caractérisé par le fait que l'humidité de la bande de papier (1), saisie à l'aide d'un appareil de mesure (5) de traversée, est appliquée à une calculatrice (6), que le régulateur (31) du train de séchage (3) est commandé par l'intermédiaire de la calculatrice (6), en fonction de l'humidité finale moyenne prédéterminée ($U_E$) de la bande de papier et que, pour assurer une différence d'humidité ($\Delta U_{HF}$) déterminée à l'avance, la calculatrice (6) détermine à l'avance pour le régulateur (41) du sécheur haute fréquence (4) une valeur moyenne de la puissance électrique ($N_H$), qui est à maintenir constante à l'aide d'un réglage de l'intensité du champ.

FIG 1

FIG 2